# EUROPEAN PATENT SPECIFICATION

(11) **EP 1 401 309 B1**
(45) Date of publication and mention of the grant of the patent: **28.04.2010**
(21) Application number: 02737870.2
(22) Date of filing: 29.05.2002
(51) Int. Cl.: A47J 19/06

(54) **A GARLIC CUTTER**
KNOBLAUCHSCHNEIDER
COUPE-AIL

(30) Priority: 29.05.2001 DK 200100853
(43) Date of publication of application: 31.03.2004
(73) Proprietor: Juhler ApS, 2730 Herlev (DK)
(72) Inventor: Juhler, Jan, 2300 Copenhagen S. (DK)
(74) Representative: Plougmann & Vingtoft A/S
(86) International application number: PCT/DK2002/000366
(87) International publication number: WO 2002/096251

(56) References cited:
- WO-A1-94/03091
- US-A- 3 580 168
- US-A- 5 467 699

## Description

The present invention relates to a cutter for cutting garlic or other kinds of vegetables.

### Background of the Invention

When using garlic in the food, it is important that the sap of the garlic remains in the garlic after cutting. The garlic presses known from prior art normally comprise a punch and a grid opening through which the garlic is extruded/squeezed. Those known presses do not cut the garlic, but extrude it through the grid due to the thickness of the slats, which means that a huge amount of the garlic is bound in the grid and thus not enters into the food. Further, as the garlic is extruded, the sap is pressed out of the garlic and will thus evaporate too fast on the pan. Known presses extrude the garlic into a kind of paste mass, which very easy can stick to the pan and thus loose its flavour.

Furthermore, it Is often difficult to clean the press due to very small openings in the grid.

In known presses It Is not possible to choose between different hole sizes In case the garlic has to be cut into smaller or larger pieces.

It is an object of the present invention to provide a cutter that cuts the garlic instead of extruding or squeezing It.

It is a further object of the present invention to provide a cutter that is easy to dean.

It is a still further object of the present invention to provide a cutter, wherein the size of the holes in the cutter is adjustable, so as to be able to choose between the different size of pieces to cut the garlic in.

### Description of the invention

Thus, the present invention provides a cutter for cutting garlic comprising:
- a cutting part comprising at least an upper and lower grid of cutting edges separably stacked on each other, and
- a punching part for pressing the garlic towards said grids of cutting edges for cutting the garlic.

The cutting part that cuts the garlic into pieces preferably comprises two layers of grids with cutting edges laid on each other, but the cutting part may comprise more than two grids, such as three or four, and the grids may have any kind of pattern depending on the wanted piece-shape. The upper grid and lower grid may be rotationally connected e.g. by use of a flexible material such as rubber. The cutter may comprise means for positioning the grids in relation to each other so as to ensure that a desired position or relation between the grids is always provided. Said means may comprise pins or elevated zones of the grids and/or the cutting part and/or the punching part.

The punching part and the cutting part may be rotationally connected. Such a rotational connection may comprise a rubber material or any other flexible material connecting the cutting part and the punching part. In an embodiment the punching part and the cutting part may be connected by a hinge positioned opposite to handgrips that may be attached to the cutting and punching part, respectively. Thus, pressing the punching part towards the cutting part provides the cutting of the garlic, so as to press the garlic through the grid.

The hinge may comprise one or more rings attached to the cutting part and onto which the upper grid and the punching part can be detachably hung (like positioning paper in a ring binder). In another embodiment the punching part may comprise a male part and the cutting part may comprise a female part, the male part and the female part being adapted to engage each other or vice versa. The male part may comprise a portion extending from the punching part, said portion may be adapted to extend through a hole in the cutting part, said hole constituting the female part. In an embodiment the male part may extend outwardly in a direction transverse to a plane defined by the punching part and the female part may extend in a direction transverse to a plane defined by the cutting part.

The male part may define an angle in relation to the plane defined by the punching or cutting part of 320 degrees, such as 300 degrees, such as 280 degrees, such as 270 degrees, such as 260 degrees, such as 240 degrees, such as 220 degrees, such as 200 degrees, such as 180 degrees, such as 160 degrees, such as 140 degrees, such as 120 degrees, such as 100 degrees, such as 90 degrees, such as 80 degrees, such as 60 degrees, such as 40 degrees, such 20 degrees, such as 0 degrees.

The female part may define an angle in relation to the plane defined by the punching or cutting part of 320 degrees, such as 300 degrees, such as 280 degrees, such as 270 degrees, such as 260 degrees, such as 240 degrees, such as 220 degrees, such as 200 degrees, such as 180 degrees, such as 160 degrees, such as 140 degrees, such as 120 degrees, such as 100 degrees, such as 90 degrees, such as 80 degrees, such as 60 degrees, such as 40 degrees, such 20 degrees, such as 0 degrees.

The upper grid may be adapted to be detachably positioned In the hinge so that when the male part extends through the female part, the upper grid may not be removed from the hinge. The upper grid may comprise a female part adapted to surround at least a part of the male part.

The male part comprised in the punching part may be adapted to extend transversely to the cutting part so as to elevate said cutting part In relation to a suface, e.g. a kitchen table, when the punching part is positioned in a first position. In said first position it may be possible to place garlic In the cutter.

The hinge connecting the cutting part and punching part may be adapted to position the punching part in a parking position wherein the punching part defines an angle in relation to the cutting part of 320 degrees, such as 300 degrees, such as 280 degrees, such as 270 degrees, such as 260 degrees, such as 240 degrees, such as 220 degrees, such as 200 degrees, such as 180 degrees, such as 160 degrees, such as 140 degrees, such as 120 degrees, such as 100 degrees, such as 90 degrees, such as 80 degrees, such as 60 degrees, such as 40 degrees, such 20 degrees. When the cutter is placed in the parking position, it may be possible to operate the cutter using only one hand.

In order to be able to choose between different piece-shapes and to allow for an easier cleaning of the cutter, the grids may be hinged connected to each other. Thus, the upper grid can be removed from the lower grid, so that the leavings from the garlic that may be bound in the upper and/or lower grid are easier to remove. Further, the two grids may be displacably positioned on and in relation to each other, so that the "common holes" provided by the two grids are smaller than the holes in each grid. Thus, it Is possible to choose between different hole sizes; one small size when using both grids and one larger size when using one grid.

The at least two grids may be formed as truncated cone-shaped baskets, one positioned inside the other, and the punching part may then be substantially truncated cone-shaped so as to fit into said truncated cone-shaped basket(s). Thus, the grids form a basket for receiving the garlic to be cut.

The cutting part may have other shapes than the above mentioned - it may for example comprise a cylindrical container having a flat bottom grid, and wherein the punching part comprises a plunger for pressing the garlic towards the grid. In a preferred embodiment, the cutting part and punching part is made of sheet material, and wherein the two grids are formed as sheets placed on each other.

Preferably, each grid comprises a plurality of blades composing said cutting edges. The blades may be arranged in predetermined pattem(s), so as to provide predetermined hole sizes and shapes In the grid. Preferably, the holes are quadrangular, but they can have any circular, elliptical or polygonal shape. The blades need to be so thin that the garlic is cut and not extruded through the grid, and preferably the thickness of the blades is between 0.1 mm and 1 mm, such as between 0.3 mm and 0.7 mm, such as 0.5 mm. The thickness of the blades can be larger depending on which vegetable to be cut.

Preferably, the blades are made of thin metal strings having upper cutting edges, but they can be made of plastic strings or strings of a composite material.

The size and shape of the holes may be varied depending on whether both grids are used or only one of them, and depending on the pattern of each grid. The pattern of the upper grid may be different from the pattern of the lower grid. The sectional area of a predetermined hole may be 1 mm² or 2 mm² or 3 mm² or more, such as 5 mm² or 6,25 mm² or 10 mm² or 15 mm² or 20 mm² or 25 mm² or 30 mm² or 35 mm² or 40 mm² or 50 mm².

Each grid may comprise strings In two directions positioned in two layers, such that a first set of strings extend in a first direction and on top a second set of strings extend in a second direction, e.g. at right angles. In an embodiment the lower set of strings from the upper grid and the upper set of strings from the lower grid may extend In the same direction and In the same plane. Thus It may be possible to provide two grids which when placed on top of each other only comprises three layers of strings.

In order to reduce the distance between the two layers of cutting edges, the grids may further comprise slits provided in each grid, so that the two grids can go Into engagement with each other when being laid on each other.

Alternatively, the cutting part may comprise only one single grid of cutting edges, wherein the thickness of the cutting edges is thin enough to cut the garlic and not extrude it. The thickness is preferably between 0.1 mm and 1 mm, such as between 0.3 mm and 0.7 mm, such as 0.5 mm.

The cutting and punching part, including the handgrips, may be made of a metal and/or plastic and/or composite material. The handgrips may comprise a stop so as to ensure that the handgrips are spaced from each other. The stops may be positioned in an end of the cutting part and punching part e.g. the end opposite the female part and the male part respectively. The advantage of the stops may be that it prevents pressing a hand using the cutter, and thus it may prevent blood blisters.

Instead of having grids of cutting edges, the cutting part may comprise one or more layers of cutting edges, each of which comprises strings extending only in one common direction. This may provide the possibility of cutting the garlic In slides. The cutter may be adapted to cut in slides and in small pieces depending on the position of the grids or sets of strings.

In an other embodiment the cutter may comprise a single cutting edge adapted to cut the garlic in two parts. Said single cutting edge may be positioned at a different position than the grids but could also be part of the grids. The single cutting edge may be a string but could also be a blade.

Furthermore the cutter may be provided with garlic positioning means for positioning the garlic relatively to the single cutting edge. The positioning means may be pins extending from e.g. the cutting part, but could also be surfaces extending in a direction transverse to the cutting part or the punching part. In an embodiment the garlic positioning means may be formed as an elevated zone with a concave hole, the elevated zone having a grove extending though the concave hole so as to enable the single cutting edge to pass through a garlic placed In the concave hole.

It should be understood that the Invention could be used for cutting of other vegetables than garlic, such as carrots, cucumbers, etc.

### Brief description of the figures

The invention will now be further described in details below with reference to the figures, wherein
fig. 1 show a first embodiment of a garlic cutter according to the invention,
figs. 2a-2d shows grids of cutting edges according to the Invention,
fig. 3 shows a second embodiment of a garlic cutter according to the invention, and figs. 4-10 shows a third embodiment of the garlic cutter according to the invention.

### Detailed description of the figures

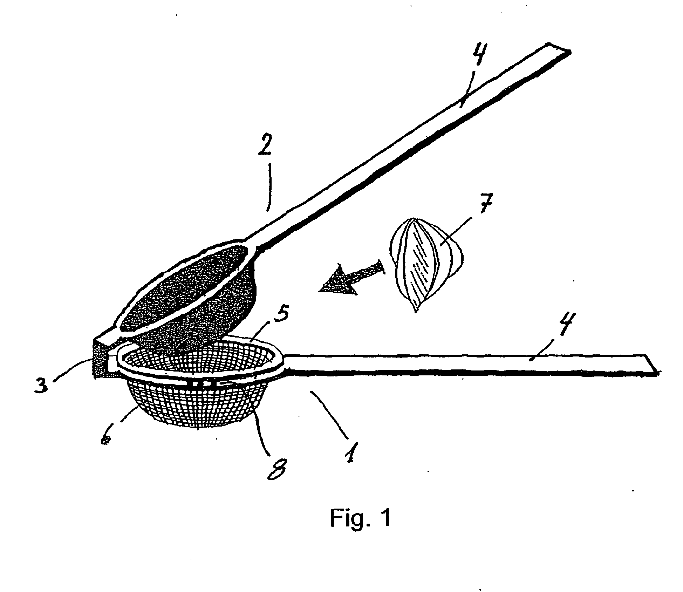

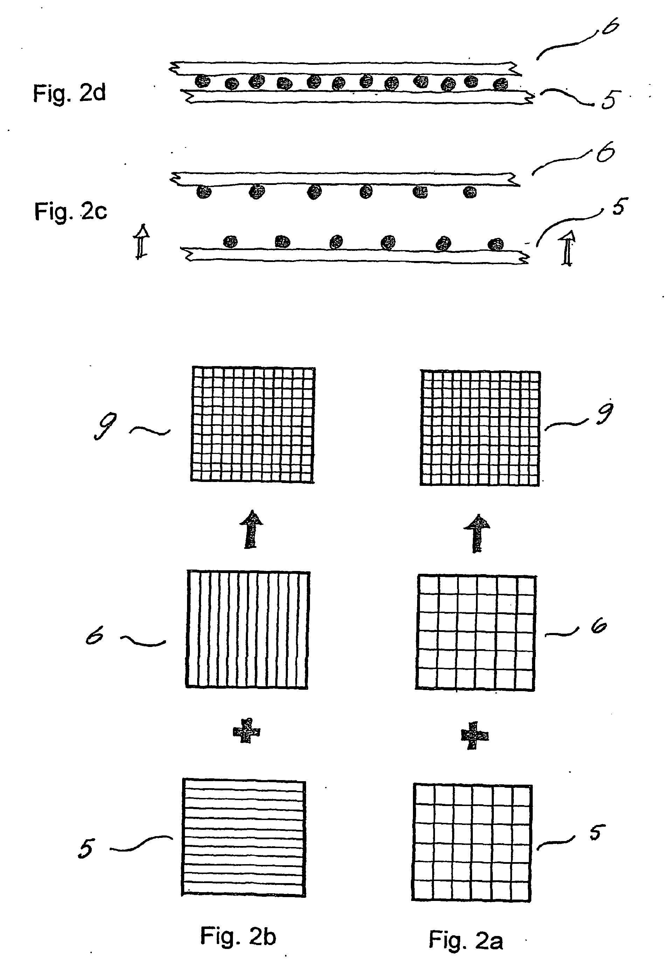

The garlic cutter shown in fig. 1 comprises a cutting part I and a punching part 2 that are connected by a hinge 3, and each part comprises a handgrip 4. The cutting part 1 comprises a basket-like portion consisting of two grids, an upper 5 and a lower 6, of cutting edges for cutting the garlic into pieces. The garlic 7 is positioned in the basket-like grids, and the punching part is pressed towards the grids for cutting the garlic into pieces. The garlic will then be cut into pieces having a cross-section corresponding to the cross-section of the holes in the common grid 9 of fig. 2.

After having cut the garlic, the cutter can be opened, so as to clean the cutter in an easier way. The punching part 2 is lifted up and the upper grid 5 is removed from the lower grid 6 due to the hinge 8. Thus, it is easy to clean both the upper and lower grid for those leavings of the garlic that may be bound therein.

Fig. 2a shows the upper grid 5 and the lower grid 6, which together, when being placed on top of each other and displaced in relation to each other, constitute a common grid 9 with smaller holes than the holes in each of the grid. In case the garlic has to be cut into larger pieces, only the lower grid may be used. In fig. 2b the upper grid 5 comprises a set of strings extending in the same direction and the lower grid comprises a set of strings extending In a transverse direction. When the grids are used alone the garlic is sliced, and when the grids are placed on top of each other the garlic is cut into smaller pieces. The lower grid 5 and the upper grid 6 may comprise strings in two layers as shown in fig. 2c. The layers of strings facing each other may extend in the same direction such that the common grid 9 only comprises three layers, as shown in fig. 2d.

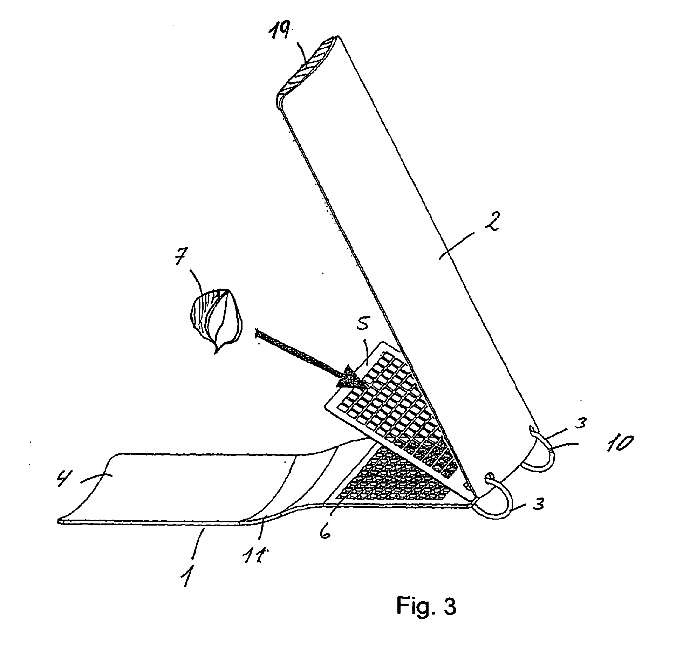

Fig. 3 shows a second embodiment of the garlic cutter according to the invention. The cutter comprises a cutting part 1 and a punching part 2 that are connected to each other by hinges 3 which in this embodiment is shown as rings. The cutting part comprises two grids, an upper 5 and a lower 6, of cutting edges for cutting the garlic into pieces. If the garlic must be cut into small pieces, the garlic is positioned on top of the upper grid 5, so that It Is cut through both grids. If it must be cut into large pieces, the garlic is positioned on top of the lower grid 6, so that it is cut only through the lower grid. The upper grid 5 and the punching part 2 are detachable from the cutting part via the slits 10 in the hinges 3.

An operator cannot get his fingers caught between the two handgrips 4 due to the distance between the two handgrips 4 provided by the deflection 11.

The punching part 2 comprises at its inner surface an insert 19 that is adapted to press the garlic towards the grids. The insert is preferably made of a resilient material, so that it may go into the holes in the grid when pressing the punching part towards the grids, so as to press garlic through the grids. The insert may comprise, at the portion right above the grids, projections that fit into the holes of the grids, so as to obtain a still better pressing through of the garlic through the grids.

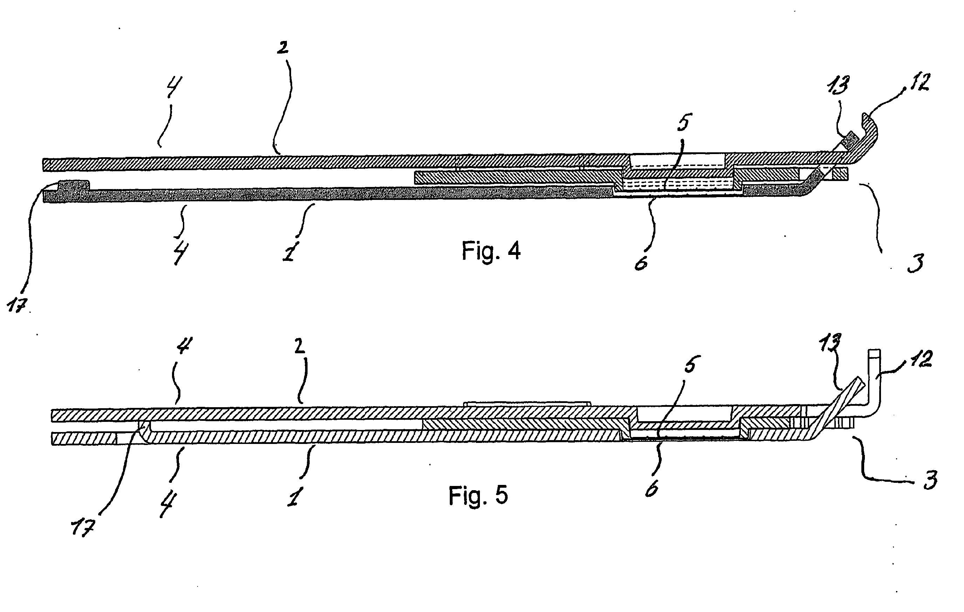

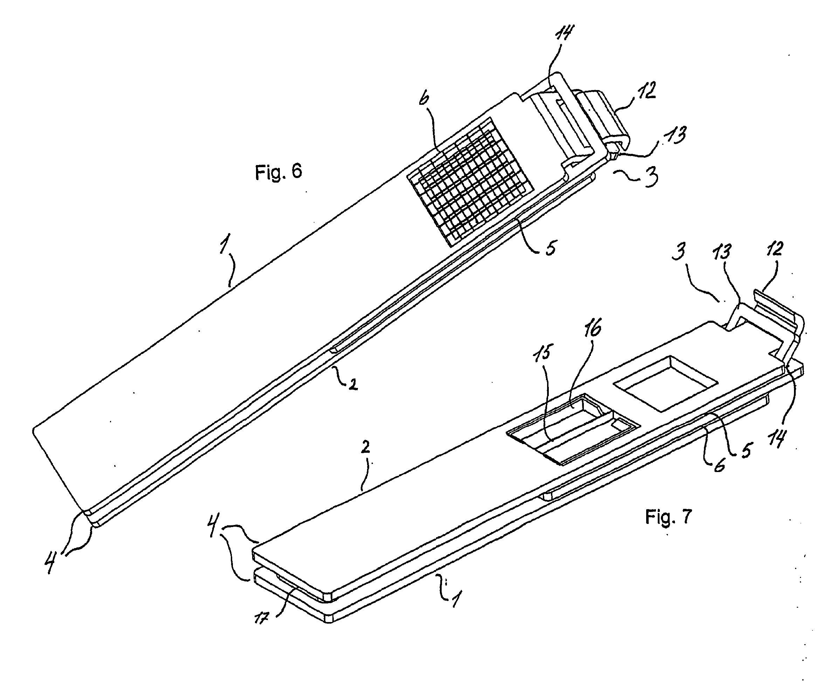

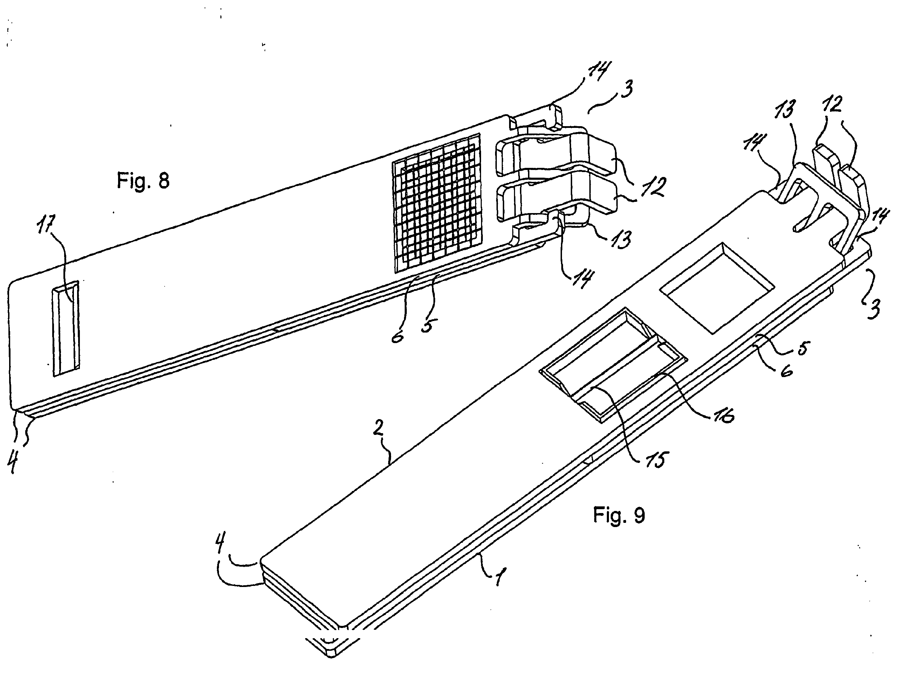

Figs. 4-9 shows two different versions of the third embodiment of the invention. The third embodiment further comprises a male part 12 and a female part 13, the two parts constituting the hinge 3. The upper grid 5 is provided with a hole 14 so that the grid may be locked between the male part 12 and the female part 13. In some versions e.g. in figs. 8 and 9 a part of one side of the hole 14 has been removed. In the third embodiment the cutter is provided with a single cutting edge 15 which may cut garlic in two parts, when the garlic is placed in the positioning means 16. The cutter further comprises a stop 17 which prevents that the user of the cutter presses the skin of hand between the punching part 2 and the cutting part 3.

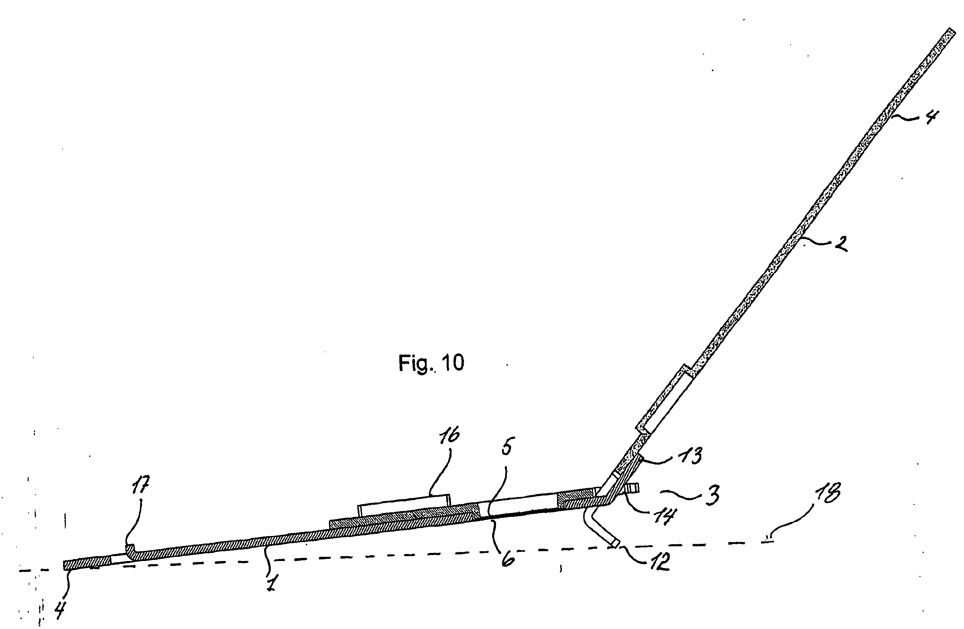

Fig. 10 show the cutter in the third embodiment positioned in the parked position, where the lower grid 6 does not touch the surface of e.g. a kitchen table 18.

## Claims

1. A garlic cutter comprising
- a cutting part (1) comprising at least an upper (5) and lower (6) grid of cutting edges separably stacked on each other, and
- a punching part (2) for pressing the garlic towards said grids of cutting edges for cutting the garlic.

2. A garlic cutter according to claim 1, wherein the cutting part (1) and the punching part (2) are rotationally connected.

3. A garlic cutter according to claim 1 or 2, further comprising a hinge (8) connecting the cutting part (1) and the punching part (2).

4. A garlic cutter according to any of the preceding claims, wherein the upper grid (5) and lower grid (6) are rotationally connected.

5. A garlic cutter according to any of the preceding claims, wherein the upper and lower grids (5), (6) are hinged connected to each other.

6. A garlic cutter according to any of claims 3-5, wherein the upper grid (5) is rotationally connected to the hinge (8) connecting the cutting part (1) and punching part (2).

7. A garlic cutter according to any of claims 3-6, wherein the hinge (8) comprises one or more rings attached to the cutting part (1) and in which the upper grid (5) and the punching part (2) are detachably hung on.

8. A garlic cutter according to any of claims 3-6, wherein the punching part (2) comprises a male part (12) and the cutting part (1) comprises a female part (13), the male part (12) and the female part (13) being adapted to engage each other.

9. A garlic cutter according to any of claims 3-6, wherein the male part (12) extends outwardly in a direction transverse to a plane defined by the punching part (2) and the female part (13) extends in a direction transverse to a plane defined by the cutting part (1).

10. A garlic cutter according to claim 8 or 9, wherein the male part (12) is adapted to extend transversely to the cutting part (1) so as to elevate said cutting part in relation to a surface when the punching part (2) is positioned in a first position.

11. A garlic cutter according to any of claims 3-10, wherein the hinge (8) connecting the cutting part (1) and punching part (2) is adapted to position the punching part (2) in a parking position wherein the punching part (2) defines an angle in relation to the cutting part of 320 degrees, such as 300 degrees, such as 280 degrees, such as 270 degrees, such as 260 degrees, such as 240 degrees, such as 220 degrees, such as 200 degrees, such as 180 degrees, such as 160 degrees, such as 140 degrees, such as 120 degrees, such as 100 degrees, such as 90 degrees, such as 80 degrees, such as 60 degrees, such as 40 degrees, such 20 degrees.

12. A garlic cutter according to any of the preceding claims, wherein the at least two grids are formed as truncated cone-shaped baskets, one positioned inside the other, and wherein the punching part is substantially truncated cone-shaped so as to fit into said truncated cone-shaped basket(s).

13. A garlic cutter according to any of claims 1-11, wherein the cutting part (1) and the punching part (2) are formed as sheets.

14. A garlic cutter according to any of the preceding claims, further comprising handgrips (4) attached to the cutting (1) and punching part (2), respectively.

15. A garlic cutter according to claim 14, wherein the handgrips (4) comprise a stop (17) so as to ensure that the handgrips are spaced from each other.

16. A garlic cutter according to any of the preceding claims, further comprising positioning means (16) for positioning the grids (5,6) in relation to each other.

17. A garlic cutter according to any of the preceding claims, wherein each grid (5,6) comprises a plurality of blades composing said cutting edges and being arranged in a predetermined pattern, so as to provide predetermined hole sizes and shapes in the grid.

18. A garlic cutter according to claim 17, wherein the thickness of the blades is between 0.1 mm and 1 mm, such as between 0.3 mm and 0.7 mm, such as 0.5 mm.

19. A garlic cutter according to claim 17 or 18, wherein the sectional area of a predetermined hole is 1 mm² or 2 mm² or 3 mm² or more, such as 5 mm² or 6,25 mm² or 10 mm² or 15 mm² or 20 mm² or 25 mm² or 30 mm² or 35 mm² or 40 mm² or 50 mm².

20. A garlic cutter according to any of claims 17-19, wherein the cross sectional shape of the holes is circular and/or polygonal.

21. A garlic cutter according to any of the preceding claims, wherein the grids (5,6) engage each other by means of slits provided in each grid (5,6).

22. A garlic cutter according to any of the preceding claims, further comprising a single cutting edge (15) adapted to cut the garlic in two parts.

23. A garlic cutter according to claim 22, further comprising garlic positioning means (16) for positioning the garlic relatively to the single cutting edge.

## Patentansprüche

1. Knoblauchschneider umfassend
- ein Schneidteil (1) umfassend mindestens ein oberes (5) und eine unteres (6) Gitter aus Schneiden umfasst, die trennbar übereinander gestapelt sind, und
- ein Stempelteil (2) zum Drücken des Knoblauchs in Richtung der Gitter aus Schneiden zum Schneiden des Knoblauchs.

2. Knoblauchschneider nach Anspruch 1, wobei das Schneidteil (1) und das Stempelteil (2) drehbar verbunden sind.

3. Knoblauchschneider nach Anspruch 1 oder Anspruch 2, ferner umfassend ein Scharnier (8), das das Schneidteil (1) und das Stempelteil (2) verbindet.

4. Knoblauchschneider nach einem der vorstehenden Ansprüche, wobei das obere Gitter (5) und das untere Gitter (6) drehbar verbunden sind.

5. Knoblauchschneider nach einem der vorstehenden Ansprüche, wobei das obere und das untere Gitter (5), (6) drehbar miteinander verbunden sind.

6. Knoblauchschneider nach einem der Ansprüche 3-5, wobei das obere Gitter (5) drehbar mit dem Scharnier (8), das das Schneidteil (1) und das Stempelteil (2) verbindet, verbunden ist.

7. Knoblauchschneider nach einem der Ansprüche 3-6, wobei das Scharnier (8) einen oder mehrere Ringe umfasst, die an dem Schneidteil (1) befestigt sind und in die das obere Gitter (5) und das Stempelteil (2) abnehmbar eingehängt sind.

8. Knoblauchschneider nach einem der Ansprüche 3-6, wobei das Stempelteil (2) ein Steckerteil (12) umfasst und das Schneidteil (1) ein Buchsenteil (13) umfasst, wobei das Steckerteil (12) und das Buchsenteil (13) derart beschaffen sind, dass sie ineinander eingreifen kann.

9. Knoblauchschneider nach einem der Ansprüche 3-6, wobei sich der Steckerteil (12) in einer Richtung quer zu einer Ebene, die durch das Stempelteil (2) definiert ist, nach außen erstreckt und sich das Buchsenteil (13) in einer Richtung quer zu einer Ebene, die durch das Schneidteil (1) definiert ist, erstreckt.

10. Knoblauchschneider nach Anspruch 8 oder 9, wobei das Steckerteil (12) derart beschaffen ist, dass es sich quer zum Schneidteil (1) erstreckt, sodass das Schneidteil im Verhältnis zu einer Oberfläche angehoben ist, wenn sich das Stempelteil (2) in einer ersten Position befindet.

11. Knoblauchschneider nach einem der Ansprüche 3-10, wobei das Scharnier (8), das das Schneidteil (1) und das Stempelteil (2) verbindet, derart beschaffen ist, dass es das Stempelteil (2) in einer Halteposition anbringt, in der das Stempelteil (2) einen Winkel im Verhältnis zum Schneidteil von 320 Grad, wie 300 Grad, wie 280 Grad, wie 270 Grad, wie 260 Grad, wie 240 Grad, wie 220 Grad, wie 200 Grad, wie 180 Grad, wie 160 Grad, wie 140 Grad, wie 120 Grad, wie 100 Grad, wie 90 Grad, wie 80 Grad, wie 60 Grad, wie 40 Grad, wie 20 Grad, bildet.

12. Knoblauchschneider nach einem der vorstehenden Ansprüche, wobei die mindestens zwei Gitter als abgestumpfte kegelförmige Körbe ausgebildet sind, von denen einer im Inneren des anderen angebracht ist, und wobei das Stempelteil im Wesentlichen abgestumpft kegelförmig ist, um in den/die abgestumpften kegelförmigen Korb/Körbe zu passen.

13. Knoblauchschneider nach einem der Ansprüche 1-11, wobei das Schneidteil (1) und das Stempelteil (2) als Bleche ausgebildet sind.

14. Knoblauchschneider nach einem der vorstehenden Ansprüche, ferner umfassend Handgriffe (4), die am Schneidteil (1) bzw. am Stempelteil (2) befestigt sind.

15. Knoblauchschneider nach Anspruch 14, wobei die Handgriffe (4) einen Anschlag (17) umfassen, mit dem eine Beabstandung der Handgriffe gewährleistet ist.

16. Knoblauchschneider nach einem der vorstehenden Ansprüche, ferner umfassend Positionierungsmittel (16) zum Positionieren der Gitter (5,6) im Verhältnis zueinander.

17. Knoblauchschneider nach einem der vorstehenden Ansprüche, wobei jedes Gitter (5, 6) eine Mehrzahl von Klingen umfasst, die die Schneiden bilden und in einem vorbestimmten Muster angeordnet sind, um vorbestimmte Lochgrößen und -formen im Gitter bereitzustellen.

18. Knoblauchschneider nach Anspruch 17, wobei die Dichte der Klingen zwischen 0,1 mm und 1 mm, wie zwischen 0,3 mm und 0,7 mm, wie 0,5 mm, liegt.

19. Knoblauchschneider nach Anspruch 17 oder 18, wobei die Querschnittsfläche eines vorbestimmten Lochs 1 mm² oder 2 mm² oder 3 mm² oder mehr, wie 5 mm² oder 6,25 mm² oder 10 mm² oder 15 mm² oder 20 mm² oder 25 mm² oder 30 mm² oder 35 mm² oder 40 mm² oder 50 mm², beträgt.

20. Knoblauchschneider nach einem der Ansprüche 17-19, wobei die Querschnittsform der Löcher kreisförmig und/oder polygonal ist.

21. Knoblauchschneider nach einem der vorstehenden Ansprüche, wobei die Gitter (5, 6) durch Schlitze, die in jedem Gitter (5, 6) vorgesehen sind, ineinander eingreifen.

22. Knoblauchschneider noch einen der vorstehenden Ansprüche, ferner umfassend eine einzige Schneide (15), die so beschaffen ist, dass sie den Knoblauch in zwei Teile schneidet.

23. Knoblauchschneider nach Anspruch 22, ferner umfassend Positionierungsmittel (16) für Knoblauch zum Positionieren des Knoblauchs im Verhältnis zu der einzigen Schneide.

## Revendications

1. Presse-ail comprenant
- une partie coupante (1) comprenant au moins une grille supérieure (5) et une grille inférieure (6) d'arêtes tranchantes empilées l'une sur l'autre de manière séparable, et
- une pièce d'enfoncement (2) destinée à presser l'ail vers lesdites grilles d'arêtes tranchantes pour couper l'ail.

2. Presse-ail selon la revendication 1 dans lequel la partie coupante (1) et la pièce d'enfoncement (2) sont reliées de manière rotative.

3. Presse-ail selon la revendication 1 ou 2, comportant également une charnière (8) reliant la partie coupante (1) et la pièce d'enfoncement (2).

4. Presse-ail selon l'une des revendications précédentes, dans lequel la grille supérieure (5) et la grille inférieure (6) sont reliées de manière rotative.

5. Presse-ail selon l'une des revendications précédentes, dans lequel les grilles supérieure (5) et inférieure (6) sont reliées l'une à l'autre par charnière.

6. Presse-ail selon l'une des revendications 3 à 5, dans lequel la grille supérieure (5) est reliée par rotation à la charnière (8) reliant la partie coupante (1) et la pièce d'enfoncement (2).

7. Presse-ail selon l'une des revendications 3 à 6, dans lequel la charnière (8) comprend un ou plusieurs anneaux fixés à la partie coupante (1) et sur lequel la grille supérieure (5) et la pièce d'enfoncement (2) sont accrochées de manière détachable.

8. Presse-ail selon l'une des revendications 3 à 6, sur lequel la pièce d'enfoncement (2) comprend une partie mâle (12) et la partie coupante (1) comporte une partie femelle (13), la partie mâle (12) et la partie femelle (13) étant adaptées pour s'emboîter.

9. Presse-ail selon l'une des revendications 3 à 6, dans lequel la partie mâle (12) s'étend vers l'extérieur dans un sens transversal au plan défini par la pièce d'enfoncement (2) et la partie femelle (13) s'étend dans un sens transversal au plan défini par la partie coupante (1).

10. Presse-ail selon la revendication 8 ou 9, dans lequel la partie mâle (12) est adaptée pour s'étendre de manière transversale par rapport à la partie coupante (1), de façon à surélever ladite partie coupante par rapport à une surface lorsque la pièce d'enfoncement (2) est placée dans une première position.

11. Presse-ail selon l'une des revendications 3 à 10, dans lequel la charnière (8) reliant la partie coupante (1) et la pièce d'enfoncement (2) est adaptée pour placer la pièce d'enfoncement (2) dans une position de repos dans laquelle la pièce d'enfoncement (2) définit un angle par rapport à la partie coupante de 320 degrés, tel que de 300 degrés, tel que de 280 degrés, tel que de 270 degrés, tel que de 260 degrés, tel que de 240 degrés, tel que de 220 degrés, tel que de 200 degrés, tel que de 180 degrés, tel que de 160 degrés, tel que de 140 degrés, tel que de 120 degrés, tel que de 100 degrés, tel que de 90 degrés, tel que de 80 degrés, tel que de 60 degrés, tel que de 40 degrés, tel que de 20 degrés.

12. Presse-ail selon l'une des revendications précédentes, dans lequel les au moins deux grilles sont formées de paniers en forme de cône tronqué, placés l'un dans l'autre et dans lequel la pièce d'enfoncement est en grande partie en forme de cône tronqué, de manière à pouvoir entrer dans le(s) panier(s) en forme de cône tronqué.

13. Presse-ail selon l'une des revendications 1 à 11, dans lequel la partie coupante (1) et la pièce d'enfoncement (2) sont sous forme de plaques.

14. Presse-ail selon l'une des revendications précédentes, comportant également des poignées (4) fixées respectivement à la partie coupante (1) et à la pièce d'enfoncement (2).

15. Presse-ail selon la revendication 14, dans lequel les poignées (4) comportent une butée (17) assurant que les poignées sont distancées l'une de l'autre.

16. Presse-ail selon l'une des revendications précédentes, comprenant des moyens de positionnement (16) destinés à placer les grilles (5,6) l'une par rapport à l'autre.

17. Presse-ail selon l'une des revendications précédentes, dans lequel chaque grille (5, 6) comporte plusieurs lames composant lesdites arêtes tranchantes et disposées selon un modèle prédéterminé, afin de permettre de réaliser des trous de tailles et de formes prédéterminées dans la grille.

18. Presse-ail selon la revendication 17, dans lequel l'épaisseur des lames est comprise entre 0,1 mm et 1 mm, ainsi qu'entre 0,3 mm et 0,7 mm, ainsi que de 0,5 mm.

19. Presse-ail selon la revendication 17 ou 18, dans lequel la surface d'un trou prédéterminé est de 1 mm² ou 2 mm² ou 3 mm² ou plus, tel que 5 mm² ou 6,25 mm² ou 10 mm² ou 15 mm² ou 20 mm² ou 25 mm² ou 30 mm² ou 35 mm² ou 40 mm² ou 50 mm².

20. Presse-ail selon l'une des revendications 17 à 19, dans lequel la forme de coupe des trous est circulaire et/ou polygonale.

21. Presse-ail selon l'une des revendications précédentes, dans lequel les grilles (5, 6) s'emboîtent l'une dans l'autre au moyen de fentes prévues dans chaque grille (5, 6).

22. Presse-ail selon l'une des revendications précédentes, comprenant également une seule arête tranchante (15) adaptée pour couper l'ail en deux parties.

23. Presse-ail selon la revendication 22, comprenant également des moyens de positionnement (16) de l'ail destinés à placer l'ail relativement à la seule arête tranchante.
